**Europäisches Patentamt**

**European Patent Office**

**Office européen des brevets**

(11) Veröffentlichungsnummer: **0 424 749 A1**

# EUROPÄISCHE PATENTANMELDUNG

(21) Anmeldenummer: **90119563.6**

(22) Anmeldetag: **12.10.90**

(51) Int. Cl.⁵: **F16K 31/00, F16K 24/06, F42B 23/24**

(30) Priorität: **24.10.89 DE 3935302**

(43) Veröffentlichungstag der Anmeldung:
**02.05.91 Patentblatt 91/18**

(84) Benannte Vertragsstaaten:
**DE FR GB IT NL SE**

(71) Anmelder: **Dynamit Nobel Aktiengesellschaft**
**Postfach 12 61**
**W-5210 Troisdorf/Bez. Köln(DE)**

(72) Erfinder: **Dicke, Jost**
**Amselstrasse 3**
**W-5241 Friedewald(DE)**

(54) **Auf Feuchtigkeit ansprechendes Belüftungsventil.**

(57) Ein auf Feuchtigkeit ansprechendes Ventil weist einen Quellkörper (5), beispielsweise aus hochverdichtetem Naturschwamm, auf, der bei Feuchtigkeit im Ventil sein Volumen vergrößert und dabei die Durchtrittsfläche für ein Fluid ändert. Das Ventil ist besonders geeignet als Belüftungsventil in einer ausstülpbaren Abdeckhaube auf einer Hohlladungsmine.

Das Ventil verhindert ein Eindringen von Wasser, insbesondere in der Verteilphase der Mine, aber auch noch in der Lauerstellung; es ist kein Nachteil, wenn es bei Abwesenheit von Feuchtigkeit stets offen ist.

EP 0 424 749 A1

## AUF FEUCHTIGKEIT ANSPRECHENDES BELÜFTUNGSVENTIL

Die Erfindung richtet sich auf ein Ventil, dessen Durchtrittsöffnung für ein Fluid nach einer bestimmten Zeit veränderbar ist, und auf die Anwendung eines solchen Ventils als Belüftungsventil in einer ausstülpbaren Abdeckhaube auf einer Mine oder einem entsprechenden militärischen Wirkkörper.

Aus der DE 3 131 691 C2 ist ein Belüftungsventil für eine haubenartige Abdeckung auf einer Mine oder auf einem entsprechenden militärischen Wirkkörper bekannt. Dieses Ventil soll verhindern, daß Wasser in den Hohlraum unter der Abdeckung gelangen kann, nachdem sich die Abdeckhaube während des Verlegens ausgestülpt hat, was nur dann einwandfrei erfolgt, wenn zunächst Luft über das Ventil in den Hohlraum gelangen kann. Gegen Ende des Ausstülpens der Abdeckhaube wird bei diesem Wirkkörper durch einen sich dabei spannenden Schließfaden eine Kugel gegen einen Ventilsitz gezogen und der Belüftungskanal geschlossen.

Ein Schwachpunkt bei dieser Ausführungsform ist die Einrichtung, durch die verhindert werden soll, daß die Kugel schon während des Ausstülpens der Abdeckhaube gegen den Ventilsitz gepreßt wird. Außerdem kann während des Ausstülpens Wasser in den Hohlraum eingesaugt werden.

Aufgabe der Erfindung ist ein robustes, einfach herzustellendes und zu montierendes Ventil, das sich bei Änderung des Feuchtigkeitsgehaltes selbständig öffnet oder schließt. Speziell soll eine Vorrichtung, wie sie beispielsweise in der DE 3 191 691 C2 beschrieben ist, so umgestaltet werden, daß sie ein Eindringen von Wasser in den Hohlraum unter der Abdeckhaube, insbesondere am Anfang unmittelbar nach der Verteilung, verhindert.

Die Aufgabe wird von einem Ventil gelöst, das dadurch gekennzeichnet ist, daß im Ventilgehäuse ein Quellkörper vor handen ist, der so mit einem Mittel zur Veränderung der Fluiddurchtrittsöffnung gekoppelt ist, daß sich bei einer Änderung des Feuchtigkeitsgehaltes des im Ventil vorhandenen Fluides durch Änderung des Quellkörpers der Strömungsquerschnitt für das Fluid im Ventil ändert.

Bei dem erfindungsgemäßen Schaltventil hat der Quellkörper eine doppelte Funktion: er ist Sensor, der die Feuchtigkeit mißt und gleichzeitig Antrieb, durch den der Meßwert in die gewünschte Wirkung umgesetzt wird, das heißt hier, daß ein Ventil auf- oder zugemacht wird; beide Funktionen übernimmt der Quellkörper bei einem ganz einfachen Ventilaufbau.

Bei der Verwendung eines erfindungsgemäßen Ventils in der Abdeckhaube von Minen kann man sich von dem bisherigen Konzept bei der Verlegung der Minen lösen, daß unabhängig von den Umgebungsbedingungen die Abdeckhauben über den Minen sofort zu öffnen sind, auch wenn dabei Wasser auf die Hohlladungseinlage gelangen könnte. Bei den mit dem erfindungsgemäßen Ventil ausgerüsteten Minen ist die Funktionsfähigkeit erhöht. Bisher hatte man die Minen erst nach dem Ausstülpen der Abdeckhauben vor dem Eindringen von Wasser schützen können. Man nahm es als unvermeidlich in Kauf, daß beim Ausstülpen neben Luft auch Wasser eingesaugt werden kann. Bei Minen mit dem erfindungsgemäßen Ventil wird das Befüllen des Hohlraumes mit Luft und damit das Ausstülpen unterbrochen, sobald mit der Luft ausreichend Feuchtigkeit (normalerweise Wasser) über das Ventil in den Quellkörper eindringt. Zwar kann es dadurch vorkommen, daß sich manche Abdeckhauben nicht entfalten werden, aber der Störeffekt auf die Minenwirkung durch eine nicht entfaltete Abdeckhaube ist nicht wesentlich anders, als eine Störung durch Wasser auf der Einlage. Bei den erfindungsgemäßen Minen besteht aber die Chance, daß sich die Abdeckhaube später, wenn die Umweltbedingungen sich so verändert haben, daß das Venitl nicht mehr im oder unter Wasser ist, bzw. wenn auf und in die Venitlöffnung kein Wasser (z. B. Regen) mehr gelangt, aufrichten und dann der erwünschte freie Raum vor der Hohlladungseinlage erreichbar ist. Es stört dabei nicht, daß das Ventil im Normalfall die gesamte Zeit offen ist bzw. bleibt.

Ohne weitere Sensoren und ohne eine Hilfsenergiequelle schließt das Ventil selbsttätig dann und nur dann, wenn wirklich Wasser durch das Belüftungsventil einzudringen droht. Ein offenes Ventil in der Abdeckhaube einer Mine tut ihrer Wirkung keinen Abbruch, beeinträchtigt nicht ihre Funktiontüchtigkeit in der Lauerstellung. Man weiß bei allen Minen, die mit einem erfindungsgemäßen Ventil ausgerüstet sind und deren Abdeckhaube sich ausgestülpt hat, daß über der Hohlladungseinlage kein Wasser sein kann. Im allerungünstigsten Fall werden in einem Minenfeld allenfalls so viele Abdeckhauben nicht ausgestülpt sein, wie sonst Minen durch mit Wasser gefüllte Abdeckhauben auch ausgefallen bzw. in ihrer Wirkung ganz erheblich reduziert wären. Da sich die Umweltbedingungen verbessern können und das Ausstülpen grundsätzlich auch später möglich bleibt, ist die Zahl wirkungsgestörter Minen mit dem erfindungsgemäßen Ventil zumindest nicht größer als bisher. Dagegen weisen die neuen Ventile eine hohe Funktionstüchtigkeit auf und sind erheblich günstiger herzustellen und zu montieren.

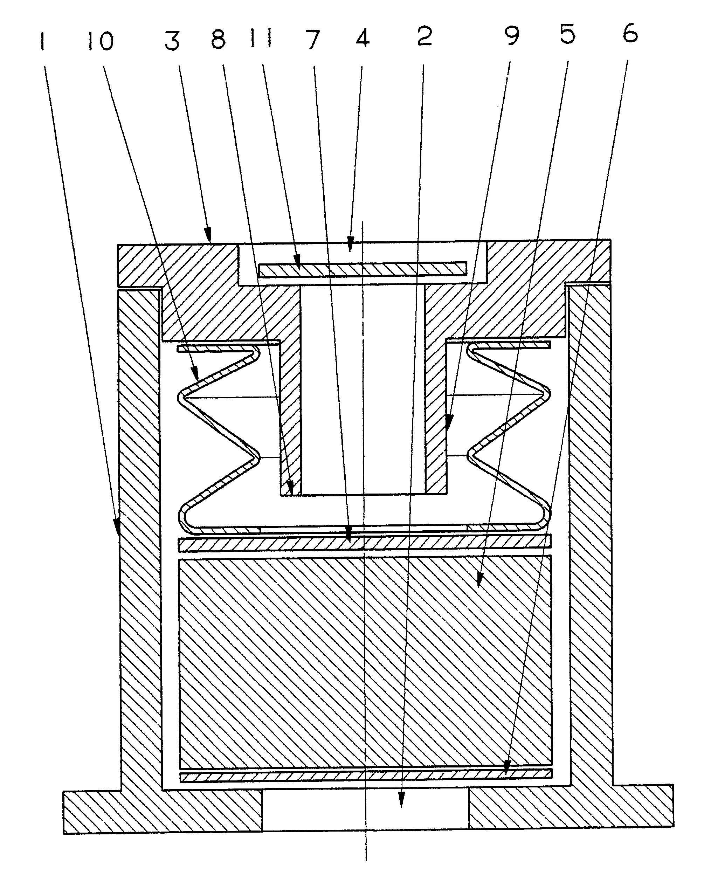

Ein Beispiel der Erfindung ist in der Zeichnung dargestellt und im folgenden weiter beschrieben. Die Figur zeigt einen Schnitt durch ein Messinggehäuse 1 mit einer Fluideintrittsöffnung 2. Der der Fluideintrittsöffnung 2 gegenüberliegende Boden des näherungsweise zylindrischen Gehäuses ist von einem Einsatz 3 mit einer zentral angeordneten Austrittsöffnung 4 abgeschlossen. Ein großer Teil des Volumens wird in dem Gehäuse von einem zylindrischen Quellkörper 5 ausgefüllt. Zur Fluideintrittsöffnung 2 hin stützt er sich auf einer gasdurchlässigen Platte 6 aus Drahtgeflecht ab. Die andere Bodenseite stößt an eine 0,3 mm dicke Gummischeibe 7. Weder der trockene Quellkörper 5 noch die Platte 6 oder die Gummischeibe 7 liegen so eng im Gehäuse 1 an, daß eine Strömung eines Fluids von der Eintrittsöffnung 2 zu der Austrittsöffnung 4 verhindert wird. Die Fluidströmung wird erst dann unterbrochen, wenn der Quellkörper 5 sich ausdehnt und dabei die Gummischeibe 7 an den unteren Rand 8 eines zylinderischen Fortsatzes 9 am Einsatz 3 gepreßt wird. Das tritt dann ein, wenn an den Quellkörper 5 Feuchtigkeit (Wasser) über die Öffnung 2 gelangt. Es ist eine Druckfeder 10 im Gehäuse 1 vorgesehen, die einmal dafür sorgt, daß das Ventil stets offen ist, wenn das Fluid hinreichend trocken ist. Sie ist auch in der Lage, das Ventil wieder zu öffnen, wenn das den Quellkörper 5 umgebende Fluid nicht mehr "naß" ist. Lag beispielsweise die aufgerichtete Mine zunächst in einer Pfütze und reichte die Wasseroberfläche über das Ventil hinaus, ging dann aber der Wasserspiegel zurück bzw. trocknete die Pfüze aus, kann sich die Abdeckhaube doch noch ausstülpen, ohne daß Wasser auf die Einlage gelangt, was bei Minen mit den bisherigen Ventilen nicht der Fall war. Ähnlich wie die Fluideintrittsöffnung 2 mit einer Platte 6 ist auch die Fluidaustrittsöffnung 4 mit einer Platte 11 als mechanischem Schutz versehen, der die Fluidströmung nicht wesentlich behindern soll.

Als Quellkörper 5 ist hier Naturschwamm vorgesehen, der mit 1000 bar vorverdichtet worden ist und leicht durch Stanzen in der gewünschten Größe hergestellt werden kann. Er hat eine Größe von 4,0 mm Durchmesser und 3,0 mm Höhe; die Quellfähigkeit ist größer als 10; die Kraft, mit der die Gummischeibe 7 auf den Rand 8 gepreßt wird, ist größer als 5 N, wenn sich der Schwamm vollsaugt.

Die Größe des Quellkörpers 5, die Länge des Halses 9 und die Dicke der Gummischeibe 7 sind so aufeinander abgestimmt, daß bei trockener Luft der Fluiddurchtritt durch das Ventil nicht allzu stark gedrosselt wird. Bringt man aber größenordnungsmäßig 1 ml Wasser über die Fluideintrittsstelle auf den Quellkörper, hat das zur Folge, daß der Fluiddurchtritt innerhalb weniger als 1 s unterbrochen wird. Wenn kein weiteres Wasser mehr an den Quellkörper im Ventilgehäuse gelangt, beginnt sich das Ventil nach ca. 24 Stunden selbsttätig zu öffnen.

## Ansprüche

1. Ventil, dessen Durchtrittsöffnung für ein Fluid nach einer bestimmten Zeit änderbar ist, **dadurch gekennzeichnet**, daß im Ventilgehäuse (1) ein Quellkörper (5) vorhanden ist, der so mit einem Mittel (7) zur Veränderung der Fluiddurchtrittsöffnung gekoppelt ist, daß sich bei einer Änderung des Feuchtigkeitsgehaltes des im Ventilgehäuse (1) enthaltenen Fluides durch Ausdehnung des Quellkörpers (5) der Strömungsquerschnitt für das Fluid im Ventil ändert.

2. Ventil nach Anspruch 1, **dadurch gekennzeichnet**, daß als Quellkörper (5) ein hochverdichteter Naturschwamm eingesetzt wird.

3. Ventil nach Anspruch 1 oder 2, **dadurch gekennzeichnet**, daß das Mittel zur Veränderung der Fluiddurchtrittsöffnung so angebracht ist, daß über oder auch unter einer Feuchtigkeitsschwelle die Fluiddurchtrittsöffnung (8) ständig verschlossen ist.

4. Verwendung eines Ventils nach Anspruch 1, 2 oder 3 als Belüftungsventil in einer ausstülpbaren Abdeckhaube auf einer Mine oder einem entsprechenden militärischen Wirkkörper.

## Europäisches Patentamt

# EUROPÄISCHER RECHERCHENBERICHT

Nummer der Anmeldung

**EP 90 11 9563**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 931 984 (KREIS) <br> * das ganze Dokument * <br> — — — | 1,3 | F 16 K 31/00 <br> F 16 K 24/06 <br> F 42 B 23/24 |
| X | AU-A-4 564 79 (CHIPPER) <br> * Seite 2, Absatz 3; Figuren 1-9 * <br> — — — | 1,2 | |
| X | US-A-2 734 521 (HENKEN) <br> * das ganze Dokument * <br> — — — | 1 | |
| A | EP-A-0 134 498 (DYNAMIT NOBEL) <br> * Seite 5, Absatz 1; Figur 4 * <br> — — — — — | 1,4 | |

RECHERCHIERTE SACHGEBIETE (Int. Cl.5)

F 16 K
F 24 D
F 42 B

Der vorliegende Recherchenbericht wurde für alle Patentansprüche erstellt

| Recherchenort | Abschlußdatum der Recherche | Prüfer |
|---|---|---|
| Den Haag | 16 Januar 91 | FONSECA Y FERNANDEZ |